(19) Europäisches Patentamt
European Patent Office
Office européen des brevets

(11) **EP 3 955 342 A1**

(12) **EUROPEAN PATENT APPLICATION**
published in accordance with Art. 153(4) EPC

(43) Date of publication:
**16.02.2022 Bulletin 2022/07**

(21) Application number: **20787229.2**

(22) Date of filing: **26.02.2020**

(51) International Patent Classification (IPC):
**H01M 4/139** (2010.01)  **H01G 11/06** (2013.01)
**H01G 11/50** (2013.01)  **H01G 11/86** (2013.01)

(52) Cooperative Patent Classification (CPC):
**H01G 11/06; H01G 11/50; H01G 11/86;**
**H01M 4/139;** Y02E 60/10

(86) International application number:
**PCT/JP2020/007736**

(87) International publication number:
**WO 2020/208965 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2019 JP 2019074791**

(71) Applicant: **Musashi Energy Solutions Co., Ltd.**
**Hokuto-shi, Yamanashi 409-1501 (JP)**

(72) Inventors:
• **AONO, Shintaro**
**Hokuto-shi, Yamanashi 409-1501 (JP)**
• **NANSAKA, Kenji**
**Hokuto-shi, Yamanashi 409-1501 (JP)**

(74) Representative: **TBK**
**Bavariaring 4-6**
**80336 München (DE)**

(54) **ELECTRODE PRODUCTION METHOD AND METHOD FOR PRODUCING ELECTRICITY STORAGE DEVICE**

(57) A method of manufacturing an electrode is for manufacturing an electrode that includes an active material doped with an alkali metal. An electrode precursor is immersed in a pretreatment solution. The electrode precursor includes a current collector and an active material layer, which is formed on a surface of the current collector and contains an active material. The pretreatment solution includes alkali metal ion, a solvent, and an additive that is capable of controlling reductive decomposition of the solvent. After immersing the electrode precursor in the pretreatment solution, the active material is doped with an alkali metal by using a dope solution including alkali metal ion.

FIG. 1

**Description**

CROSS-REFERENCE TO RELATED APPLICATION

This international application claims the benefit of Japanese Patent Application No. 2019-074791, filed on April 10, 2019 in the Japan Patent Office, and the entire disclosure of Japanese Patent Application No. 2019-074791 is incorporated herein by reference.

TECHNICAL FIELD

The present disclosure relates to a method of manufacturing an electrode and a method of manufacturing a power storage device.

BACKGROUND ART

In recent years, downsizing and weight reduction of electronic devices have been remarkable, which further increases a demand for downsizing and weight reduction also of batteries used as drive power supplies for the electronic devices.

To satisfy such a demand for downsizing and weight reduction, nonaqueous electrolyte rechargeable batteries, typified by a lithium-ion rechargeable battery, have been developed. As a power storage device applicable to a use that requires high energy density characteristics and high output characteristics, a lithium ion capacitor is known. In addition, a sodium ion battery and a sodium ion capacitor, using sodium that is lower in cost and is a richer resource than lithium, are also known.

A process of doping an electrode with an alkali metal in advance (generally called pre-doping) is adopted in these batteries and capacitors for various purposes. A method of pre-doping an electrode with an alkali metal includes, for example, a single-wafer processing method and a continuous method. In the single-wafer processing method and the continuous method, the pre-doping is performed outside of the power storage device (hereinafter referred to as outside of the system). In the single-wafer processing method, the pre-doping is executed in a setting where a cut electrode plate and an alkali metal plate are separated by a separator and placed in a dope solution. In the continuous method, the pre-doping is executed while a belt-like electrode plate is transferred through a dope solution. The single-wafer processing method is disclosed in Patent Documents 1 and 2. The continuous method is disclosed in Patent Documents 3 to 6.

PRIOR ART DOCUMENTS

PATENT DOCUMENTS

Patent Document 1: Japanese Unexamined Patent Application Publication No. H9-293499A
Patent Document 2: Japanese Unexamined Patent Application Publication No. 2012-069894A
Patent Document 3: Japanese Unexamined Patent Application Publication No. H10-308212A
Patent Document 4: Japanese Unexamined Patent Application Publication No. 2008-077963A
Patent Document 5: Japanese Unexamined Patent Application Publication No. 2012-049543A
Patent Document 6: Japanese Unexamined Patent Application Publication No. 2012-049544A

SUMMARY OF THE INVENTION

PROBLEMS TO BE SOLVED BY THE INVENTION

In the conventional methods, when an electrode that is pre-doped outside of the system is applied to a power storage device, a large amount of gas is produced from the electrode due to insufficient float characteristics. Also in the conventional method, an execution of a high-rate pre-doping outside of the system leads to a problem of lithium precipitation that causes low charging efficiency.

In one aspect of the present disclosure, it is desirable to provide a method of manufacturing an electrode and a method of manufacturing a power storage device that enables improvements in float characteristics of the power storage device, reduction of gas production from the electrode, and enhancement in charging efficiency.

MEANS FOR SOLVING THE PROBLEMS

One aspect of the present disclosure is a method of manufacturing an electrode including an active material doped with an alkali metal. The method includes immersing an electrode precursor in a pretreatment solution, where the electrode precursor includes a current collector and an active material layer, where the active material layer is formed on a surface of the current collector and contains an active material, and where the pretreatment solution includes alkali metal ion, a solvent, and an additive that is capable of controlling reductive decomposition of the solvent. The method also includes doping the active material with an alkali metal by using a dope solution including alkali metal ion after immersing the electrode precursor in the pretreatment solution.

A power storage device that includes an electrode manufactured by using the method of manufacturing an electrode in one aspect of the present disclosure is excellent in float characteristics. Also, an electrode manufactured by using the method of manufacturing an electrode in one aspect of the present disclosure is unlikely to produce gas and renders high charging efficiency.

Another aspect of the present disclosure is a method of manufacturing a power storage device including an electrode cell. The method includes immersing a negative electrode precursor in a pretreatment solution, where the negative electrode precursor includes a negative electrode current collector and a negative-electrode active material layer, where the negative-electrode active material layer is formed on a surface of the negative electrode current collector and contains a negative-electrode active material, and where the pretreatment solution includes alkali metal ion, a solvent, and an additive that is capable of controlling reductive decomposition of the solvent. The method also includes producing a negative electrode by doping the negative-electrode active material with an alkali metal by using a dope solution including alkali metal ion after immersing the negative electrode precursor in the pretreatment solution. The method also includes forming the electrode cell by serially laminating the negative electrode, a separator, an electrode different from the negative electrode.

A power storage device manufactured by using the method of manufacturing a power storage device in another aspect of the present disclosure is excellent in float characteristics. Also, the power storage device manufactured by using the method of manufacturing a power storage device in another aspect of the present disclosure is unlikely to produce gas from the electrode and renders high charging efficiency.

BRIEF DESCRIPTION OF THE DRAWINGS

FIG. 1 is an explanatory diagram showing a configuration of an electrode manufacturing apparatus.
FIG. 2 is an explanatory diagram showing an electrolyte solution bath moved downwardly.
FIG. 3 is an explanatory diagram showing an electrical configuration of the electrode manufacturing apparatus.
FIG. 4 is a sectional side view showing a configuration of counter electrode units and a porous insulating member.
FIG. 5 is a plan view showing a configuration of an electrode precursor.
FIG. 6 is a sectional view taken along line VI-VI in FIG. 5.

EXPLANATION OF REFERENCE NUMERALS

1...electrode manufacturing apparatus; 7, 203, 205, 207...electrolyte solution bath; 9, 11, 13, 15, 17, 19, 21, 23, 25, 27, 29, 31, 305, 307, 109, 311, 313, 315, 317, 119, 321, 323, 33, 35, 37, 39, 41, 43, 45...conveyor roller; 47...supply roll; 49...wind-up roll; 51, 52, 54...counter electrode unit; 53...porous insulating member; 55...supporting platform; 57...circulation filtering unit; 61, 62, 64...direct current power source; 63...blower; 66...power supply control unit; 67, 68, 70...supporting rod; 69...partition plate; 71...space; 73...electrode precursor; 75...electrode; 77...conductive base material; 79...alkali metal containing plate; 81...filter; 83...pump; 85...pipe; 87, 89, 91, 94, 97, 99...cable; 93...current collector; 95...active material layer; 101...CPU; 103...cleaning bath; 105...memory.

MODE FOR CARRYING OUT THE INVENTION

Hereinafter, example embodiments of the present disclosure will be explained with reference to the drawings.

[First Embodiment]

1. Configuration of Electrode Manufacturing Apparatus 1

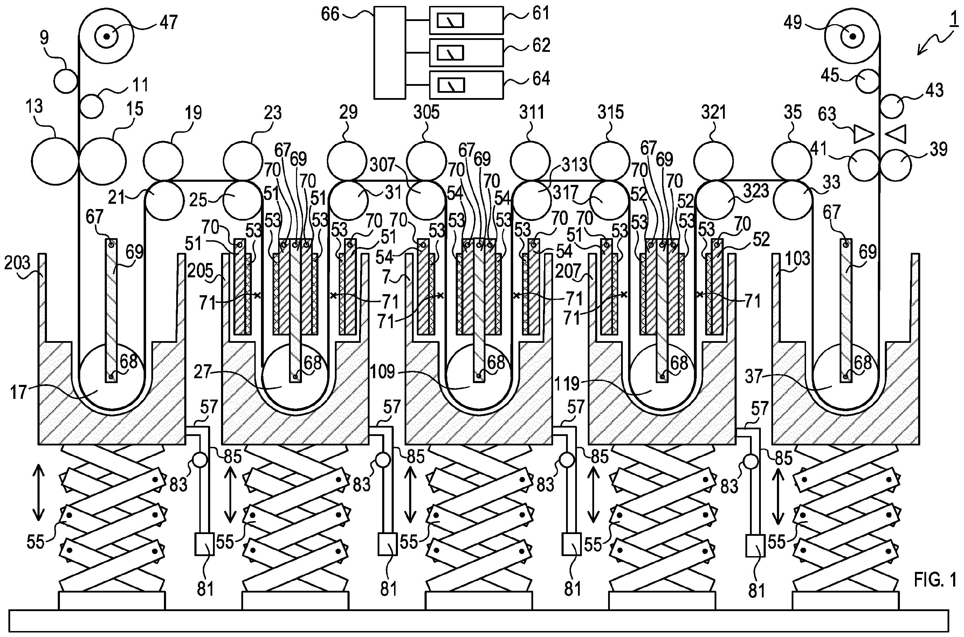

A configuration of an electrode manufacturing apparatus 1 will be explained based on FIG. 1 to FIG. 4. As shown in FIG. 1, the electrode manufacturing apparatus 1 includes electrolyte solution baths 203, 205, 7, 207; a cleaning bath 103; conveyor rollers 9, 11, 13, 15, 17, 19, 21, 23, 25, 27, 29, 31, 305, 307, 109, 311, 313, 315, 317, 119, 321, 323, 33, 35, 37, 39, 41, 43, 45 (hereinafter also referred to as a group of conveyor rollers); a supply roll 47; a wind-up roll 49; counter electrode units 51, 52, 54; a porous insulating member 53; a supporting platform 55; a circulation filtering unit 57; three direct current power sources 61, 62, 64; a blower 63; and a power supply control unit 66.

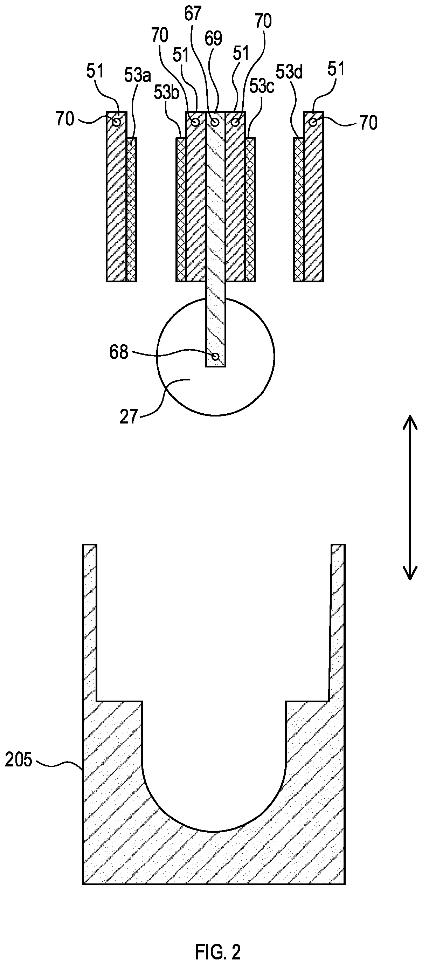

As shown in FIG. 1 and FIG. 2, the electrolyte solution bath 205 is a square shaped open-top bath. A base of the electrolyte solution bath 205 has an approximately U-shaped cross sectional shape. The electrolyte solution bath 205 contains a partition plate 69, four counter electrode units 51, four porous insulating members 53, and the conveyor roller 27. As shown in FIG. 2, the four porous insulating members 53 include 53a, 53b, 53c, and 53d.

The partition plate 69 is supported by a supporting rod 67 that passes through an upper end of the partition plate 69. The supporting rod 67 is fixed on a wall or the like which is not shown in the drawings. Except for its upper end, the partition plate 69 is situated inside the electrolyte solution bath 205. The partition plate 69 extends in perpendicular directions and divides an interior of the electrolyte solution bath 205 into two spaces. The conveyor roller 27 is attached to a lower end of the partition plate 69. The partition plate 69 and the conveyor roller 27 are supported by a supporting rod 68 that passes them through. A vicinity of the lower end of the partition plate 69 is cut off so that the partition plate 69 does not contact the conveyor roller 27. A space exists between the conveyor roller 27 and the base of the electrolyte solution bath 205.

The four counter electrode units 51 are each supported by a supporting rod 70, which passes through an upper end of each counter electrode unit 51. The four counter electrode units 51 each extend in the perpendicular directions. The supporting rods 70 are fixed on a wall or the like which is not shown in the drawings. Except for their upper ends, the counter electrode units 51 are situated inside the electrolyte solution bath 205. Two of the four counter electrode units 51 are arranged to hold the partition plate 69 from two sides. The remaining two counter electrode units 51 are arranged alongside an inner side surface of the electrolyte solution bath 205.

As shown in FIG. 1, a space 71 exists between the counter electrode unit 51 arranged by the partition plate 69 and the counter electrode units 51 arranged alongside the inner side surface of the electrolyte solution bath 205. The counter electrode units 51 are coupled with a positive electrode of a direct current power source 61. Detailed configuration of the counter electrode units 51 will be given later.

On a surface of each of the counter electrode units 51 facing the space 71, the porous insulating member 53 is attached. Detailed configuration of the porous insulating members 53 will be given later. The electrolyte solution bath 205 accommodates a dope solution. The dope solution will be explained later.

An electrolyte solution bath 203 basically has a configuration similar to the electrolyte solution bath 205. The electrolyte solution bath 203 does not contain the counter electrode units 51 and the porous insulating member 53. The electrolyte solution bath 203 contains the conveyor roller 17 in place of the conveyor roller 27. The conveyor roller 17 is similar to the conveyor roller 27. The electrolyte solution bath 203 accommodates a pretreatment solution. The pretreatment solution will be explained later.

An electrolyte solution bath 7 basically has a configuration similar to the electrolyte solution bath 205. The electrolyte solution bath 7 contains four counter electrode units 54 and a conveyor roller 109 in place of the four counter electrode units 51 and the conveyor roller 27. The four counter electrode units 54 are similar to the four counter electrode units 51. The conveyor roller 109 is similar to the conveyor roller 27. The counter electrode units 54 are coupled with a positive electrode of a direct current power source 62. The electrolyte solution bath 7 accommodates the dope solution.

An electrolyte solution bath 207 has a configuration similar to the electrolyte solution bath 205. The electrolyte solution bath 207 contains four counter electrode units 52 and a conveyor roller 119 in place of the four counter electrode units 51 and the conveyor roller 27. The four counter electrode units 52 are similar to the four counter electrode units 51. The conveyor roller 119 is similar to the conveyor roller 27. The counter electrode units 52 are coupled with a positive electrode of a direct current power source 64. The electrolyte solution bath 207 accommodates the dope solution.

The cleaning bath 103 basically has a configuration similar to the electrolyte solution bath 205. The cleaning bath 103 does not contain the counter electrode units 51 and the porous insulating members 53. The cleaning bath 103 contains the conveyor roller 37 in place of the conveyor roller 27. The conveyor roller 37 is similar to the conveyor roller 27. The cleaning bath 103 accommodates a cleaning solution.

Conveyor rollers 25, 29, 307, 311, 317, and 321 are made from electrically conductive materials. Other conveyor rollers of the group of conveyor rollers are made from elastomer except for their bearing portions. The group of conveyor rollers conveys an electrode precursor 73, which will be mentioned later, along a specific path. The path alon which the group of conveyor rollers conveys the electrode precursor 73 starts from the supply roll 47, travels through interiors of the electrolyte solution bath 203, the electrolyte solution bath 205, the electrolyte solution bath 7, the electrolyte solution bath 207, and the cleaning bath 103 in this order, and ends at the wind-up roll 49.

A part of the path that passes through the interior of the electrolyte solution bath 203 begins with a downward travel between an inner side surface of the electrolyte solution bath 203 and the partition plate 69, changes its direction of travel upward by the conveyor roller 17, and ends with an upward travel between the inner side surface of the electrolyte solution bath 203 and the opposing partition plate 69.

A part of the path that passes through the interior of the electrolyte solution bath 205 begins with a downward travel through the space 71 situated between the porous insulating member 53 attached to the inner side surface of the electrolyte solution bath 205 and the porous insulating member 53 opposingly disposed on a side of the partition plate 69, changes its direction of travel upward by the conveyor roller 27, and ends with an upward travel through the space 71 situated between the porous insulating member 53 attached to the inner side surface of the electrolyte solution bath 205 and the porous insulating member 53 opposingly disposed on the side of the partition plate 69.

A part of the path that passes through the interior of the electrolyte solution bath 7 begins with downward travel through the space 71 between the porous insulating member 53 attached to an inner side surface of the electrolyte solution bath 7 and the porous insulating member 53 opposingly disposed on the side of the partition plate 69, changes its direction of travel upward by the conveyor roller 109, and ends with an upward travel through the space 71 situated between the porous insulating member 53 attached to the inner side surface of the electrolyte solution bath 7 and the porous insulating member 53 opposingly disposed on the side of the partition plate 69.

A part of the path that passes through the interior of the electrolyte solution bath 207 begins with a downward travel through the space 71 situated between the porous insulating member 53 attached to an inner side surface of the electrolyte solution bath 207 and the porous insulating member 53 opposingly disposed on the side of the partition plate 69, changes its direction of travel upward by the conveyor roller 119, and ends with an upward travel through the space 71 situated between the porous insulating member 53 attached to the inner side surface of the electrolyte solution bath 207 and the porous insulating member 53 opposingly disposed on a side of the partition plate 69.

A part of the path that passes through the interior of the cleaning bath 103 begins with a downward travel between an inner side surface of the cleaning bath 103 and the partition plate 69, changes its direction of travel upward by the conveyor roller 37, and ends with an upward travel between the inner side surface of the cleaning bath 103 and the partition plate 69.

The supply roll 47 has the electrode precursor 73 wound around its outer circumference. That is, the supply roll 47 retains the electrode precursor 73 in a wound state. The group of conveyor rollers draws and conveys the electrode precursor 73 retained on the supply roll 47.

The wind-up roll 49 winds up and stores the electrode 75 conveyed by the group of conveyor rollers. The electrode 75 is produced by a pre-doping of the electrode precursor 73 with alkali metal in the electrolyte solution baths 205, 7, 207.

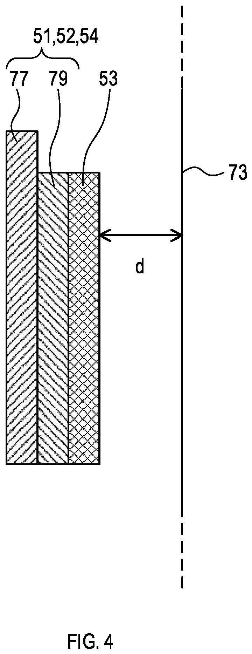

The counter electrode units 51, 52, 54 have a plate-like shape. As shown in FIG. 4, the counter electrode units 51, 52, 54 are formed by layering a conductive base material 77 and an alkali metal containing plate 79. Examples of materials for the conductive base material 77 include copper, stainless steel, and nickel. A form of the alkali metal containing plate 79 is not particularly limited; examples may include an alkali metal plate, and an alkali metal alloy plate. The thickness of the alkali metal containing plate 79 may be, for example, from 0.03 to 3 mm.

The porous insulating member 53 has a plate-like shape. As shown in FIG. 4, the porous insulating member 53 is layered on the alkali metal containing plate 79 and attached to a surface of the counter electrode units 51, 52, 54. The plate-like shape of the porous insulating member 53 represents the shape when the porous insulating member 53 is attached to the surface of the counter electrode units 51, 52, 54. The porous insulating member 53 may be a member that keeps a certain shape by itself or, may be a member that is easily deformable such as a net.

As shown in FIG. 4, the porous insulating member 53 and the electrode precursor 73 conveyed by the group of conveyor rollers do not contact each other. The shortest distance d from the surface of the porous insulating member 53 to the electrode precursor 73 is preferably within a range of 0.5 to 100 mm, and particularly preferably within a range of 1 to 10 mm. The shortest distance d is a distance between a point on the surface of the porous insulating member 53 that is the closest to the electrode precursor 73 and the electrode precursor 73.

The porous insulating member 53 is a porous material. Thus, the dope solution that will be explained later can pass through the porous insulating member 53. This enables the counter electrode units 51, 52, 54 to contact the dope solution.

Examples of the porous insulating member 53 may include a resin mesh. The resin may be, for example, polyethylene, polypropylene, nylon, polyetheretherketone, and polytetrafluoroethylene. An opening on the mesh can be appropriately determined; it may be, for example, from 0.1 $\mu$m to 10 mm, but preferably within a range of 0.1 to 5 mm. The thickness of the mesh can be appropriately determined; it may be, for example, between 1 $\mu$m and 10 mm, but preferably within a range of 30 $\mu$m to 1 mm. An opening ratio of the mesh can be appropriately determined; it may be, for example, from 5 to 98%, preferably from 5 to 95%, and more preferably 50 to 95%.

The porous insulating member 53 may be entirely made from an insulating material or may partly include an insulating layer.

The supporting platform 55 supports the electrolyte solution baths 203, 205, 7, 207 and the cleaning bath 103 from below. The supporting platform 55 can change its height. As shown in FIG. 2, by lowering the supporting platform 55 that supports the electrolyte solution bath 205 while maintaining vertical positions of the partition plate 69, the counter electrode units 51, and the porous insulating member 53, the electrolyte solution bath 205 can be moved downward relative to the partition plate 69, the counter electrode units 51, and the porous insulating member 53. By raising the supporting platform 55, the electrolyte solution bath 205 can be moved upward relative to the partition plate 69, the counter electrode units 51, and the porous insulating member 53. The supporting platform 55 that supports the electrolyte solution baths 203, 7, 207, and the cleaning bath 103 has a similar function.

A circulation filtering unit 57 is disposed in each of the electrolyte solution baths 203, 205, 7, and 207. The circulation filtering unit 57 includes a filter 81, a pump 83, and a pipe 85.

In the circulation filtering unit 57 disposed in the electrolyte solution bath 203, the pipe 85 is a circulation pipe that exits the electrolyte solution bath 203, passes through the pump 83 and the filter 81 in this order, and returns to the electrolyte solution bath 203.

The pretreatment solution in the electrolyte solution bath 203 circulates through the pipe 85 and the filter 81 by a driving force of the pump 83, and returns to the electrolyte solution bath 203. In this process, foreign substances in the pretreatment solution are filtered by the filter 81. Examples of the foreign substances may include those precipitated from the pretreatment solution and those produced from the electrode precursor 73. Materials for the filter 81 can be resins, such as polypropylene and polytetrafluoroethylene. A pore size of the filter 81 can be appropriately determined; it may be, for example, between 30 and 50 $\mu$m.

The circulation filtering units 57 disposed in the electrolyte solution baths 205, 7, and 207 are configured in a similar manner and have a similar effect. The circulation filtering units 57 disposed in the electrolyte solution baths 205, 7, and 207 are for filtering the dope solution. In FIG. 1 and FIG. 2, the dope solution and the pretreatment solution are not illustrated for the purpose of convenience.

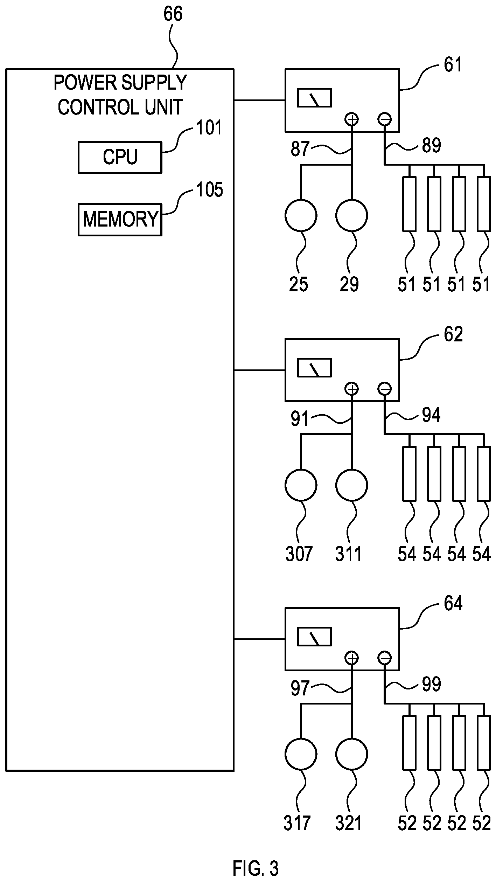

As shown in FIG. 3, a negative terminal of the direct current power source 61 is coupled with the conveyor rollers 25 and 29 individually via a cable 87. A positive terminal of the direct current power source 61 is coupled with a total of four counter electrode units 51 individually via a cable 89. The electrode precursor 73 contacts the conveyor rollers 25 and 29, which are electrically conductive. The electrode precursor 73 and the counter electrode units 51 are inside the dope solution, which is an electrolyte solution. Therefore, the electrode precursor 73 and the counter electrode units 51 are electrically coupled with one another. The direct current power source 61 supplies the counter electrode units 51 with electric current via the cables 87 and 89, and the conveyor roller 25 and 29.

As shown in FIG. 3, a negative terminal of the direct current power source 62 is coupled with the conveyor rollers 307 and 311 individually via a cable 91. A positive terminal of the direct current power source 62 is coupled with a total of four counter electrode units 54 individually via a cable 94. The electrode precursor 73 contacts the conveyor roller 307 and 311, which are electrically conductive. The electrode precursor 73 and the counter electrode units 54 are inside the dope solution, which is an electrolyte solution. Therefore, the electrode precursor 73 and the counter electrode units 54 are electrically coupled with one another. The direct current power source 62 supplies the counter electrode units 54 with electric current via the cables 91 and 93, and the conveyor rollers 307 and 311.

As shown in FIG. 3, a negative terminal of the direct current power source 64 is coupled with the conveyor rollers 317 and 321 individually via a cable 97. A positive terminal of the direct current power source 64 is coupled with a total of four counter electrode units 52 individually via a cable 99. The electrode precursor 73 contacts the conveyor rollers 317 and 321, which are electrically conductive. The electrode precursor 73 and the counter electrode units 52 are inside the dope solution, which is an electrolyte solution. Therefore, the electrode precursor 73 and the counter electrode units 52 are electrically coupled with one another. The direct current power source 64 supplies the counter electrode units 52 with electric current via the cables 97 and 99, and the conveyor rollers 317 and 321.

The blower 63 blows gases on to the electrode 75 that exits the cleaning bath 103 to vaporize the cleaning solution, and dries the electrode 75. The gases used here are preferably inactive against an active material pre-doped with the alkali metal. Examples of such gases may include helium gas, neon gas, argon gas, and dehumidified air that has moisture removed.

As shown in FIG. 3, the power supply control unit 66 is electrically coupled with the direct current power sources 61, 62, and 64. The power supply control unit 66 is a microcomputer that includes a CPU 101, and a semiconductor memory (hereinafter referred to as a memory 105) such as a RAM or a ROM.

2. Configuration of Electrode Precursor 73

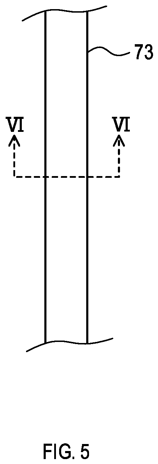

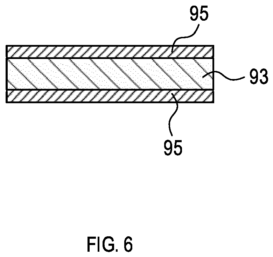

The configuration of the electrode precursor 73 will be explained with reference to FIG. 5 and FIG. 6. As shown in FIG. 5, the electrode precursor 73 has a belt-like shape. As shown in FIG. 6, the electrode precursor 73 includes a belt-like current collector 93 and active material layers 95 on each side of the current collector 93.

The current collector 93 is preferably a metal foil, for example, of copper, nickel, and stainless steel. The current collector 93 may include a conductive layer, containing a carbon material as a main component, formed on the aforementioned metal foil. The thickness of the current collector 93 may be from 5 to 50 $\mu$m, for example.

The active material layers 95 can be fabricated by, for example, preparing a slurry that contains an active material before doping with the alkali metal, a binder, or the like; applying thus prepared slurry on the current collector 93; and drying the slurry.

Examples of the aforementioned binder may include, rubber-based binder such as styrene-butadiene rubber (SBR) and NBR; fluorine resin such as polytetrafluoroethylene and polyvinylidene fluoride; polypropylene; polyethylene; and fluorine modified (meth)acrylic binder as disclosed in JP2009-246137.

The aforementioned slurry may include other components in addition to the active material and the binder. Examples of those other components may include carbon black; graphite; vapor-grown carbon fiber; conductive agent such as metal powder; carboxyl methyl cellulose; sodium salt or ammonium salt; methyl cellulose; hydroxymethyl cellulose; ethyl cellulose; hydroxypropyl cellulose; polyvinyl alcohol; oxidized starch; phosphorylated starch; and thickener such as casein.

The thickness of the active material layer 95 is not particularly limited.

However, it is, for example, 5 to 500 $\mu$m, preferably 10 to 200 $\mu$m, and particularly preferably 10 to 100 $\mu$m.

The active material included in the active material layer 95 is not particularly limited as long as it is an electrode active material applicable to a battery or a capacitor that uses insertion/desorption of alkali metal ion. The active material may be a negative-electrode active material or may be a positive-electrode active material.

The negative-electrode active material is not particularly limited, and examples of which may include a carbon material such as graphite, easily-graphitizable carbon, hardly-graphitizable carbon, and a composite carbon material made by coating graphite particles with carbides such as pitch and resin; and metal or semimetal, such as Si and Sn, that can be alloyed with lithium or a material that includes oxides of these metal or semimetal. Specific examples of the carbon material may include a carbon material disclosed in JP2013-258392. Specific examples of the metal or semimetal that can be alloyed with lithium or the material that includes oxides of these metal or semimetal may include materials disclosed in JP2005-123175 and JP2006-107795.

Examples of the positive-electrode active material may include transition metal oxides such as cobalt oxide, nickel oxide, manganese oxide, and vanadium oxide; and sulfur-based active materials such as elemental sulfur and metal sulfides.

Both of the positive-electrode active material and the negative-electrode active material may be made from a single substance or made by mixing two or more substances. The electrode manufacturing apparatus 1 of the present disclosure is suitable for a case in which the negative-electrode active material is pre-doped with the alkali metal. It is particularly preferable that the negative-electrode active material includes a carbon material or Si, or oxides of the carbon material or Si.

The alkali metal for pre-doping the active material is preferably lithium or sodium, but particularly, lithium is preferable. In a case where the electrode precursor 73 is used to manufacture an electrode of a lithium-ion rechargeable battery, a density of the active material layer 95 is preferably 1.50 to 2.00 g/cc, and particularly preferably 1.60 to 1.90 g/cc.

3. Composition of Dope Solution

When using the electrode manufacturing apparatus 1, a solution (hereinafter referred to as dope solution) that includes the alkali metal ion is stored in the electrolyte solution baths 205, 7, and 207.

The dope solution includes the alkali metal ion and a solvent. Examples of the solvent may include an organic solvent. A preferable organic solvent is an aprotic organic solvent. Examples of the aprotic organic solvent may include ethylene carbonate; propylene carbonate; butylene carbonate; dimethyl carbonate; diethyl carbonate; ethyl methyl carbonate; 1-fluoroethylene carbonate; $\gamma$-butyrolactone; acetonitrile; dimethoxyethane; tetrahydrofuran; dioxolane; methylene chloride; sulfolane; diethylene glycol dimethyl ether (diglyme); diethylene glycol methyl ethyl ether; triethylene glycol dimethyl ether (triglyme); triethylene glycol butyl methyl ether; and tetraethylene glycol dimethyl ether (tetraglyme).

As the organic solvent, ionic liquid such as quaternary imidazolium salt; quaternary pyridinium salt; quaternary pyrrolidinium salt; and quaternary piperidinium salt may also be used. The organic solvent may be made from a single component or may be a mixed solvent of two or more components. An organic solvent may be made from a single component or may be a mixed solvent of two or more components.

The alkali metal ion included in the dope solution forms alkali metal salt. The alkali metal salt is preferably lithium salt or sodium salt. Examples of an anionic moiety that forms the alkali metal salt may include phosphorus anion that has a fluoro group such as $PF_6^-$, $PF_3(C_2F_5)_3^-$, and $PF_3(CF_3)_3^-$; boron anion that has a fluoro group or a cyano group such as $BF_4^-$, $BF_2(CF)_2^-$, $BF_3(CF_3)^-$, and $B(CN)_4^-$; sulfonyl imide anion that has a fluoro group such as $N(FSO_2)_2^-$, $N(CF_3SO_2)2^-$, and $N(C_2F_5SO_2)_2^-$; and organic sulfonic acid anion that has a fluoro group such as $CF_3SO_3^-$.

A concentration of the alkali metal salt in the dope solution is preferably 0.1 mol/L or more, more preferably in a range of 0.5 to 1.5 mol/L. Predoping with the alkali metal is efficiently carried out when the concentration is within the above range.

The dope solution may further include a flame retardant such as phosphazene compound. From the aspect of effective control of thermal runaway reaction at the time of doping with the alkali metal, an adding amount of the flame retardant is preferably 1 part by mass or more, more preferably 3 parts by mass or more, and further preferably 5 parts by mass or more for each 100 part by mass of the dope solution. From the aspect of obtaining a high quality doped electrode, the adding amount of the flame retardant is preferably 20 parts by mass or less, more preferably 15 parts by mass or less, and further preferably 10 parts by mass or less for 100 parts by mass of the dope solution.

The dope solution further includes an additive (hereinafter referred to as specific additive) that can control reductive decomposition of the solvent. Examples of the specific additive may include one or more kinds selected from a group consisting of a cyclic carbonate ester compound such as vinylene carbonate, fluoroethylene carbonate, and vinyl ethylene carbonate; a cyclic sulfonic acid ester compound such as 1, 3-propane sultone, 1, 4-butane sultone, and 1, 3-propene sultone; a nitryl compound such as succinonitrile and adiponitrile; and a phosphate ester compound such as phosphate (tristrimethylsilyl).

Examples of other specific additives may include lithium salt such as lithium difluorophosphate, lithium bis(fluorosulfonyl)imide, lithium bis(trifluoromethanesulfonyl)imide, lithium borofluoride, lithium bis(oxalato)borate, and $LiPF_2C_4O_8$.

A concentration of the specific additive in the dope solution is preferably 1.0 percent by mass or less, more preferably 0.5 percent by mass or less, and further preferably 0.1 percent by mass or less. The concentration of the specific additive in the dope solution is preferably 0 percent by mass or more. As a consequence of having the concentration of the specific additive in the dope solution within the aforementioned range, float characteristics of a power storage device can be improved, which can yield an effect of reducing gas production from the electrode.

4. Composition of Pretreatment Solution

A pretreatment solution includes alkali metal ion, a solvent, and the specific additive. The same alkali metal ion and solvent as used in the dope solution can be used for the pretreatment solution. A preferable solvent is one or more kinds selected from a group consisting of a carbonate-based solvent, an ester-based solvent, an ether-based solvent, a hydrocarbon-based solvent, a nitrile-based solvent, a sulfur-based solvent, and an amide-based solvent. In a case where the solvent is of these kind, the float characteristics, cycle characteristics, initial characteristics pertaining to the charge and discharge efficiency and resistance, and charge and discharge characteristics in low temperatures of the power storage device improve further.

A particularly preferable solvent is the carbonate-based solvent. Examples of the carbonate-based solvent may include cyclic carbonate and chain carbonate. Examples of the cyclic carbonate may include ethylene carbonate, propylene carbonate, butylene carbonate, and 1-fluoroethylene carbonate. Examples of the chain carbonate may include dimethyl carbonate, diethyl carbonate, and ethyl methyl carbonate.

The carbonate-based solvent may consist only of one kind of the carbonate-based solvent or may be a mixed solvent consisting of two or more kinds of the carbonate-based solvent. The mixed solvent consisting of two or more kinds of the carbonate-based solvent is preferably a mixed solvent of the cyclic carbonate and the chain carbonate. In a case where the solvent is the mixed solvent of the cyclic carbonate and the chain carbonate, the float characteristics, the cycle characteristics, the initial characteristics pertaining to the charge and discharge efficiency and resistance, and the charge and discharge characteristics in low temperatures of the power storage device may further improve.

One of the specific additive is a first specific additive. Examples of the first specific additive may include one or more kinds selected from a group consisting of a cyclic carbonate ester compound such as vinylene carbonate, fluoroethylene carbonate, and vinyl ethylene carbonate; a cyclic sulfonic acid ester compound such as 1, 3-propane sultone, 1, 4-butane sultone, and 1, 3-propene sultone; a nitryl compound such as succinonitrile and adiponitrile; and a phosphate ester compound such as phosphate (tristrimethylsilyl).

Another one of the specific additive is a second specific additive. Examples of the second specific additive may include lithium salt such as lithium difluorophosphate, lithium bis(fluorosulfonyl)imide, lithium bis(trifluoromethanesulfonyl)imide, lithium borofluoride, lithium bis(oxalato)borate, and $LiPF_2C_4O_8$. In a case where the solvent is of these kind, the float characteristics, the cycle characteristics, the initial characteristics pertaining to the charge and discharge efficiency and resistance, and the charge and discharge characteristics in low temperatures of the power storage device improve further.

The specific additive is preferably a mixture including the first specific additive and the second specific additive. In a case where the specific additive is the mixture including the first specific additive and the second specific additive, the float characteristics, the cycle characteristics, the initial characteristics pertaining to the charge and discharge efficiency and resistance, and the charge and discharge characteristics in low temperatures of the power storage device may further improve.

A concentration of the specific additive in the pretreatment solution is preferably 10 percent by mass or less, more preferably 5 percent by mass or less, and further preferably 1 percent by mass or less. The concentration of the specific additive in the pretreatment solution is preferably 0.001 percent by mass or more, more preferably 0.003 percent by mass or more, and further preferably 0.005 percent by mass or more. In a case where the concentration of the specific additive in the pretreatment solution is within the aforementioned range, the float characteristics, the cycle characteristics, the initial characteristics pertaining to the charge and discharge efficiency and resistance, and the charge and discharge characteristics in low temperatures of the power storage device further improve.

5. Manufacturing Method of Electrode 75 Using Electrode Manufacturing Apparatus 1

First of all, as a preparation to manufacture the electrode 75, the following procedures are conducted: winding the electrode precursor 73 around the supply roll 47; drawing the electrode precursor 73 from the supply roll 47 by the group of conveyor rollers; feeding the electrode precursor 73 to the wind-up roll 49 along the aforementioned path; rising the electrolyte solution baths 203, 205, 7, 207, and the cleaning bath 103 and placing them at fixed positions shown in FIG. 1; and storing the pretreatment solution in the electrolyte solution bath 203. The pretreatment solution is what was mentioned in the above "4. Composition of Pretreatment Solution". The procedures also include storing the dope solution in the electrolyte solution baths 205, 7, 207, where the dope solution is what was mentioned in the above "3. Composition of Dope Solution"; and storing the cleaning solution in the cleaning bath 103, where the cleaning solution is an organic solvent. Consequently, the space 71 of the electrolyte solution bath 203 is filled with the pretreatment solution; the spaces 71 of the electrolyte solution baths 205, 7, 207 are filled with the dope solution; and the space 71 of the cleaning bath 103 is filled with the cleaning solution.

Second of all, the electrode precursor 73 fed from the supply roll 47 to the wind-up roll 49 by the group of conveyor rollers is drawn from the supply roll 47 towards the wind-up roll 49 and conveyed along the aforementioned path. As the electrode precursor 73 passes inside the electrolyte solution bath 203, the electrode precursor 73 is immersed in the pretreatment solution. As the electrode precursor 73 passes inside the electrolyte solution baths 205, 7, 207, the active material included in the active material layer 95 is pre-doped with the alkali metal.

As a result of pre-doping the active material with the alkali metal, the electrode precursor 73 turns into the electrode 75. The electrode 75 is conveyed by the group of conveyor rollers and, at the same time, is cleaned in the cleaning bath 103. Lastly, the electrode 75 is wound up by the wind-up roll 49.

The electrode 75 manufactured by using the electrode manufacturing apparatus 1 may be a positive electrode or a negative electrode. The electrode manufacturing apparatus 1 dopes the positive-electrode active material with the alkali metal when manufacturing a positive electrode, and dopes the negative-electrode active material with the alkali metal when manufacturing the negative electrode.

In a case where lithium is occluded in the negative-electrode active material of a lithium ion capacitor, a doping amount of the alkali metal is preferably 70 to 95% with respect to a geometric capacity of the negative-electrode active material. In a case where lithium is occluded in the negative-electrode active material of the lithium-ion rechargeable battery, the doping amount of the alkali metal is preferably 10 to 30% with respect to the geometric capacity of the negative-electrode active material.

6. Method of Manufacturing Power Storage Device

The power storage device includes an electrode cell. Examples of the power storage device may include a capacitor and a battery. The capacitor is not particularly limited as long as it is a capacitor that uses insertion/desorption of the alkali metal ion. Examples of such capacitor may include a lithium ion capacitor and a sodium ion capacitor. Among these examples, the lithium ion capacitor is preferable.

The basic configuration of the positive electrode included in the capacitor may be a common configuration. It is preferable to use activated carbon as the positive-electrode active material.

A form of electrolyte included in the capacitor is usually a liquid electrolyte solution. The basic configuration of the electrolyte solution is the same as that of the aforementioned dope solution. A concentration of the alkali metal ion (alkali metal salt) in the electrolyte is preferably 0.1 mol/L or more, and more preferably within a range of 0.5 to 1.5 mol/L. The electrolyte may be in a gel form or solid form for a purposes of inhibiting leakage.

The capacitor may include a separator between the positive electrode and the negative electrode to reduce physical contact between the positive electrode and the negative electrode. Examples of the separator may include a non-woven cloth or a porous film made from a material such as cellulose rayon, polyethylene, polypropylene, polyamide, polyester, and polyimide.

Examples of a structure of the capacitor may include a laminated cell having a laminate formed from three or more of a plate-like component unit; the plate-like component unit includes the positive electrode, the negative electrode, and the interposing separator; and the laminate is enclosed in an external film.

Examples of the structure of the capacitor may also include a wound cell having a laminate formed by winding a belt-like component unit; the belt-like component unit includes the positive electrode, the negative electrode, and the interposing separator; and the laminate is stored in a square or cylindrical container.

The capacitor can be manufactured by, for example, forming a basic structure including at least the negative electrode and the positive electrode, and introducing the electrolyte in the basic structure.

In a case of the lithium ion capacitor, a density of the active material layer is preferably 0.50 to 1.50 g/cc, and particularly preferably 0.70 to 1.20 g/cc.

The battery is not particularly limited as long as it is a battery that uses insertion/desorption of the alkali metal ion; it may be a non-rechargeable battery or a rechargeable battery. Examples of the battery may include a lithium-ion rechargeable battery, a sodium ion rechargeable battery, and an air battery. Among the examples, the lithium-ion rechargeable battery is preferable.

The basic configuration of the positive electrode included in the battery may be a common configuration. In addition to these examples, an organic active material such as a nitroxy radical compound, and oxygen may also be used as the positive-electrode active material.

A configuration of the electrolyte included in the battery and a configuration of the battery itself are the same as those of the capacitor. The battery can be manufactured by, for example, forming a basic structure including at least the negative electrode and the positive electrode, and introducing the electrolyte in the basic structure.

In the method of manufacturing the power storage device of the present disclosure, the negative electrode is manufactured first by the method disclosed in the above "5. Manufacturing Method of Electrode 75 Using Electrode Manufacturing Apparatus 1". Then, the negative electrode, the separator, and an electrode different from the negative electrode are laminated serially to form the electrode cell.

7. Effects of Method of Manufacturing Electrode and Method of Manufacturing Power Storage Device

(1A) In the method of manufacturing the electrode in the present disclosure, the electrode precursor 73 is immersed in the pretreatment solution. The pretreatment solution includes the alkali metal ion, the solvent, and the specific additive. The specific additive can reduce reductive decomposition of the solvent. Next in the method of manufacturing the electrode in the present disclosure, the dope solution is used to dope the active material with the alkali metal. The power storage device that includes the electrode manufactured by the method of manufacturing the electrode in the present disclosure is excellent in the float characteristics, the cycle characteristics, the initial characteristics pertaining to the charge and discharge efficiency and resistance, and the charge and discharge characteristics in low temperatures.

(1B) The electrode manufactured by the method of manufacturing the electrode in the present disclosure is unlikely to produce gas.

(1C) In the method of manufacturing the power storage device in the present disclosure, the electrode precursor 73 is immersed in the pretreatment solution. Next in the method of manufacturing the power storage device in the present disclosure, the dope solution is used to dope the active material with the alkali metal and thereby the electrode 75 is manufactured. In the method of manufacturing the power storage device in the present disclosure, the electrode 75, which is the negative electrode, the separator, and the positive electrode are then serially laminated to form the electrode cell. The power storage device manufactured by the method of manufacturing the power storage device in the present disclosure is excellent in the float characteristics, the cycle characteristics, the initial characteristics pertaining to the charge and discharge efficiency and resistance, and the charge and discharge characteristics in low temperatures.

8. Embodiments

The present disclosure will be explained in more detail with reference to the following embodiments and comparative examples.

(8-1) Confirming Inhibition of Reductive Decomposition of Solvent by Specific Additive

According to Reference Examples 1 and 2 below, it was confirmed that the specific additive inhibits reductive decomposition of the solvent.

(Reference Example 1) Inhibition of Reductive Decomposition of Solvent by Propene Sultone

Reduction potential can be obtained by using linear sweep voltammetry.

Specifically, an electrolyte solution was prepared by having $LiPF_6$ dissolved as electrolyte salt in a liquid mixture containing ethylene carbonate, ethyl methyl carbonate, and dimethyl carbonate at a volume ratio of 3: 4: 3. The concentration of $LiPF_6$ in the electrolyte solution was 1.2 M. Consequently, 1 part by mass of propene sultone was added as the specific additive with respect to 100 parts by mass of thus prepared electrolyte solution to prepare an electrolyte solution (hereinafter referred to as additive-mixed electrolyte solution).

Then, with a graphite negative electrode being a working electrode, the additive-mixed electrolyte solution was added to a tripolar cell, which included lithium metal as a counter electrode and a reference electrode, to prepare an electrochemical cell. An electric current value was measured when the potential of the working electrode was changed from an open circuit potential to a base potential at a scanning speed of 5 mV/sec. As a result of the measurement, a reductive decomposition peak in each of ethylene carbonate, ethyl methyl carbonate, and dimethyl carbonate was decreased. According to this result of the measurement, it was able to confirm that propene sultone inhibited the reduction of the solvent.

(Reference Example 2) Inhibition of Reductive Decomposition of Solvent by Lithium Difluorophosphate

Except for using lithium difluorophosphate instead of propene sulton, procedures were the same as Reference Example 1. As a result of the measurement, the reductive composition peak in each of ethylene carbonate, ethyl methyl carbonate, and dimethyl carbonate was decreased. According to this result of the measurement, it was able to confirm that lithium difluorophosphate inhibited the reduction of the solvent.

(8-2) First Embodiment

(8-2-1) Manufacture of Negative Electrode for Power Storage Device

A long belt-like negative electrode current collector was prepared. The size of the negative electrode current collector was 150 mm in width, 100 m in length, and 8 $\mu$m in thickness. The surface roughness Ra of the negative electrode current collector was 0.1 $\mu$m. The negative electrode current collector was made from copper foil.

As shown in FIG. 6, the active material layer 95 was formed on two sides of the current collector 93 to prepare the electrode precursor 73. The current collector 93 is the negative electrode current collector. The active material layer 95 is a negative-electrode active material layer. The thickness of the active material layer 95 was 80 $\mu$m. The active material layer 95 was formed along the length of the current collector 93. The active material layer 95 was formed in a middle part of the current collector 93 across the width for 120 mm. There were portions without the negative-electrode active material layer on both ends of the current collector 93 in the width directions. A portion without the negative-electrode active material layer is a portion on which the active material layer 95 is not formed. On both ends of the current collector 93 in the width directions, the width of each portion without the negative-electrode active material layer was 15 mm.

The active material layer 95 contained graphite, carboxymethyl cellulose, acetylene black, and a binder and dispersant at a mass ratio of 88: 5: 3: 4. Graphite corresponds to the negative-electrode active material and a carbon-based material. Acetylene black corresponds to the conductive agent.

Next, a lithium electrode was manufactured as follows. First, a long copper plate with a thickness of 2 mm was prepared. A lithium metal plate was affixed on this copper plate. The size of the lithium metal plate was 120 mm in width, 800 mm in length, and 1 mm in thickness. The lithium metal plate was affixed along the length of the copper plate. The copper plate having the lithium metal plate thus affixed was prepared as the counter electrode unit 51. Eight of the same counter electrode units 51 were manufactured.

The electrode manufacturing apparatus 1 shown in FIG. 1 was prepared, and the electrode precursor 73 and the counter electrode units 51 were placed. Then, the electrolyte solution bath 203 was supplied with an electrolyte solution A-1. The electrolyte solution A-1 contained an organic solvent and LiPF6 (lithium hexafluorophosphate), and further contained lithium difluorophosphate and propene sultone as the specific additive. The concentration of lithium difluorophosphate in the electrolyte solution A-1 was 0.5 percent by mass. The concentration of propene sultone in the electrolyte solution A-1 was 0.05 percent by mass. The organic solvent in the electrolyte solution A-1 was a mixed solvent that contained ethylene carbonate, ethyl methyl carbonate, and dimethyl carbonate at a volume ratio of 3: 4: 3.

The electrolyte solution baths 205, 7, 207 were supplied with an electrolyte solution B. The electrolyte solution B contained an organic solvent and $LiPF_6$ (lithium hexafluorophosphate). The concentration of LiPF6 in the electrolyte solution B was 1.2 mol/L. The organic solvent in the electrolyte solution B was a mixed solvent that contained ethylene carbonate, ethyl methyl carbonate, and dimethyl carbonate at a volume ratio of 3: 4: 3.

Then, the electrode precursor 73 and the counter electrode units 51 placed in the electrode manufacturing apparatus 1 were coupled with a direct current power source equipped with an electric current/electric voltage monitor, and charged with an electric current of 80 A while conveying the electrode precursor 73 at a speed of 0.32 m/min. This procedure caused the negative-electrode active material in the active material layer 95 to be doped with lithium, turning the electrode precursor 73 to be the electrode 75.

The electrode 75 was led through the cleaning bath 103 storing DMC (dimethyl carbonate) at 25 □ and then collected by winding. The electrode 75 was thus manufactured. It should be noted that, in the present embodiment and other embodiments and comparative examples that will be mentioned later, the electrode 75 is the negative electrode for the lithium ion capacitor, and is the negative electrode for the power storage device.

(8-2-2) Confirmation Method and Confirmation Results for Lithium Precipitation in Negative Electrode for Power Storage Device

Through an observation of an exterior appearance of the electrode 75 obtained in the above (8-2-1), occurrence and non-occurrence of lithium precipitation were confirmed. If the lithium precipitation occurred, "Occurred" was given as an evaluation; if no lithium precipitation occurred, "Not-occurred" was given as an evaluation. The results are shown in Table 1.

[Table 1]

| | Pretreatment Solution | Dope Solution | | | Dope Negative Electrode | | Initial Characteristics | | Float Characteristics | | | Cycle Characteristics | | | Charge and Discharge Characteristics in Low Temperatures | | | |
|---|---|---|---|---|---|---|---|---|---|---|---|---|---|---|---|---|---|---|
| | Electrolyte Solution Bath 203 | Electrolyte Solution Bath 205 | Electrolyte Solution Bath 7 | Electrolyte Solution Bath 207 | Li Precipitation | Charge and Discharge Efficiency [%] | Initial Capacitance [F] | Initital Resistance [mΩ] | Cell Volume Retention Rate [%] | Capacitance Retention Rate %] | Resistance Retention Rate [%] | Cell Volume Retention Rate [%] | Capacitance Retention Rate [%] | Resistance Retention Rate [%] | Discharge Capacity [Ah] | Resistance [mΩ] | Charge Capacity [Ah] | Resistance [mΩ] |
| Embodiment 1 | A-1 | B | B | B | Not Occurred | 80.3 | 2519 | 2.26 | 113 | 100 | 104 | 105 | 95 | 108 | 0.74 | 55.83 | 0.26 | 85.1 |
| Embodiment 2 | A-1 | A-1 | A-1 | A-1 | Not Occurred | 80.5 | 2496 | 2.28 | 111 | 100 | 102 | 108 | 94 | 109 | 0.75 | 54.99 | 0.30 | 83.9 |
| Comparative Example 1 | B | B | B | B | Occurred | 75.5 | 2517 | 2.39 | 137 | 100 | 126 | 120 | 89 | 121 | 0.73 | 58.27 | 0.21 | 91.4 |
| Comparative Example 2 | B | A-1 | A-1 | A-1 | Occurred | 76.2 | - | - | - | - | - | - | - | - | - | - | - | - |

EP 3 955 342 A1

(8-2-3) Confirmation Method and Confirmation Results for Charge and Discharge Efficiency of Negative Electrode

A negative electrode having a size of 4.0 cm X 2.6 cm (excluding terminal welding spots) was formed by punching it out from the electrode 75 obtained in the above (8-2-1). Then, a three-pole cell having thus formed negative electrode as the working electrode, and the counter electrode and the reference electrode made from lithium metal was assembled. The electrolyte solution was introduced in this three-pole cell. The electrolyte solution contained 1.2 M of $LiPF_6$. The solvent of the electrolyte solution was a mixed solvent containing ethylene carbonate, ethyl methyl carbonate, and dimethyl carbonate at a volume ratio of 3: 4: 3. The three-pole cell was completed in accordance with the aforementioned procedure.

Thus produced three-pole cell was discharged at a constant electric current with the current density of 0.1 $mA/cm^2$ until a negative electrode potential reached 3.0 V vs. Li/Li+, and its discharge capacity was measured. Then, the charge and discharge efficiency was calculated from the following formula (1). The charge and discharge efficiency is shown in Table 1.

$$\text{Formula (1): Charge and discharge efficiency } (\%) = (\text{Discharge capacity/Charge capacity}) \times 100$$

(8-2-4) Positive Electrode for Power Storage Device

A positive electrode current collector was made from aluminum foil. The thickness of the positive electrode current collector was 12 $\mu$m. An opening ratio of the positive electrode current collector was 0%. On two sides of the positive electrode current collector, a positive electrode primer coating layer was each formed. On the positive electrode primer coating layer, a positive-electrode active material was formed. The thickness of the positive-electrode active material layer was 144 $\mu$m. The positive-electrode active material layer was formed along the length of the positive electrode current collector. The positive-electrode active material layer contained activated carbon, acetylene black, binder, and dispersant at a mass ratio of 88: 5: 3: 3. The positive electrode for power storage device was obtained in accordance with the aforementioned procedure.

(8-2-5) Production of Evaluation Cell

15 sheets of negative electrodes having a size of 10.0 cm $\times$ 13.0 cm (excluding the terminal welding spots) were cut out from the negative electrode for the power storage device obtained in the above (8-2-1). 14 sheets of positive electrodes having a size of 9.7 cm $\times$ 12.5 cm (excluding the terminal welding spots) were cut out from the positive electrode for the power storage device obtained in the above (8-2-4).

Then, the positive electrode and the negative electrode were laminated alternately interposing a separator, which had a thickness of 35 $\mu$m and was made from polyethylene non-woven cloths, to produce a laminated electrode unit. In this procedure, the terminal welding spots of the positive electrode current collector and the terminal welding spots of the negative electrode current collector were arranged to be oppositely situated, and the negative electrodes were arranged to occupy the outermost part of the laminated electrode unit.

Then, the separator was disposed at each of the uppermost part and the lowermost part of the laminated electrode unit, and the four sides of the laminated electrode unit were affixed with a tape. Then, the terminal welding spots of each of the 14 sheets of the positive electrode current collectors were welded to aluminum positive electrode terminals by ultrasonic welding. The terminal welding spots of each of the 15 sheets of the negative electrode current collectors were also welded to nickel negative electrode terminals by resistance welding.

Then, the laminated electrode unit was interposed between a first laminate film and a second laminate film. Then, three sides of the first laminate film and three sides of the second laminate film were joined to one another by fusion bonding. Consequently, a laminate film bag with only one side open was produced. The laminated electrode unit was stored in an inner part of the laminate film bag.

Then, the inner part of the laminate film bag was impregnated with an electrolyte solution by vacuum impregnation. The electrolyte solution contained 1.2 M of $LiPF_6$ and a solvent. The solvent was a mixed solution containing ethylene carbonate, ethyl methyl carbonate, and dimethyl carbonate at a volume ratio of 3: 4: 3. Then, the open side of the laminate film bag was closed by fusion bonding. An evaluation cell was completed in accordance with the aforementioned procedures. Using thus prepared evaluation cell, the following evaluations from (8-2-6) to (8-2-9) were conducted. Results of the evaluations are shown in Table 1.

(8-2-6) Method of Evaluation on Initial Characteristics and Results of Evaluation

The prepared evaluation cell was charged at a constant electric current of 10 A until a cell voltage reached 3.8 V. Then, a constant-voltage charging, which applies a constant voltage of 3.8 V, was conducted for 30 minutes. Then, a capacitance of the cell was measured after being discharged at a constant electric current of 10 A until the cell voltage reached 2.2 V. The measured value was evaluated as an initial capacitance. In addition, a value was calculated by dividing a voltage difference between a voltage immediately before the initiation of the discharge and a voltage 0.1 second after the initiation of the discharge by the discharge current. Thus calculated value was evaluated as an initial resistance. The initial resistance is a direct current internal resistance of the evaluation cell.

(8-2-7) Method of High-Temperature Load Test (Float Test) and Results

Before conducting a high-temperature load test, which will be explained later, the volume, the direct current internal resistance, and the capacitance of the prepared evaluation cell were measured. Then, the high-temperature load test was conducted. In the high-temperature load test, the prepared evaluation cell is kept at 3.8 V, using Direct Current Power Supply (PW8-3AQP) manufactured by TEXIO, for 1,000 hours in a constant temperature tank set at 70□ (Constant Temperature Tank DKN812, manufactured by Yamato Scientific Co., Ltd.).
Then, in a manner same as before the high-temperature load test was conducted, the cell volume, the direct current internal resistance, and the capacitance of the evaluation cell were measured. It should be noted that the direct current internal resistance and the capacitance were measured by the same methods as mentioned in the above (8-2-6). The volume of the evaluation cell was measured by the following method.

<Method of Measuring Evaluation Cell Volume>

A container containing water was placed on a scale. The density of the water was 1 g/cm$^3$. Then, the evaluation cell hanged by a wire was lowered to submerge the evaluation cell under the water in the container. The volume of the wire was negligibly small. The evaluation cell was entirely submerged under the water. The evaluation cell did not contact the bottom of the container. The mass in this state was measured using the scale. Based on the measured value of the mass, the volume of the evaluation cell was calculated using the Archimedes' principle.
Next, a capacitance retention rate was calculated using the following Formula (2). A cell volume retention rate was also measured using the following Formula (3). A resistance retention rate was also calculated using the following Formula (4).

$$\text{Formula (2): Capacitance retention rate (\%)} = (\text{Capacitance after high-temperature load test/Initial capacitance}) \times 100$$

$$\text{Formula (3): Cell volume retention rate (\%)} = (\text{Cell volume after high-temperature load test/Initial cell volume}) \times 100$$

$$\text{Formula (4): Resistance retention rate (\%)} = (\text{Direct current internal resistance after high-temperature load test/Initial resistance}) \times 100$$

The "initial capacitance" in Formula (2) is the capacitance before the high-temperature load test. The "initial cell volume" in Formula (3) is the volume of the evaluation cell before the high-temperature load test. The "initial resistance" in Formula (4) is the direct current internal resistance of the evaluation cell before the high-temperature load test.

(8-2-8) Methods of Evaluation for Cycle Characteristics and Results of Evaluation

The evaluation cell was charged at a constant electric current of 100 A until the cell voltage reached 3.8 V. Then, the evaluation cell was discharged at a constant electric current of 100 A until the cell voltage reached 2.2 V. This cycle was repeated for 100 thousand times.
Next, the evaluation cell was charged at a constant electric current of 10 A until the cell voltage reached 3.8 V. Then, the constant-voltage charging, which applies a constant voltage of 3.8 V, was conducted for 30 minutes. Then, a capacitance of the cell was measured after being discharged at a constant electric current of 10 A until the cell voltage reached 2.2 V, and thus measured capacitance was evaluated as a capacitance after the 100 thousand cycles. The capacitance retention rate (%) was calculated using the following Formula (5). The cell volumes before and after the 100 thousand cycles were also measured by the method mentioned in the above (8-2-7). The cell volume retention rate was calculated using the following Formula (6). The resistance retention rate was also calculated using the following Formula (7).

$$\text{Formula (5): Capacitance retention rate (\%)} = (\text{Capacitance after 100 thousand cycles/Initial capacitance}) \times 100$$

$$\text{Formula (6) Cell volume retention rate (\%)} = (\text{Cell volume after 100 thousand cycles/Initial cell volume}) \times 100$$

$$\text{Formula (7): Resistance retention rate (\%)} = (\text{Direct current internal resistance after 100 thousand cycles/Initial resistance}) \times 100$$

The "initial capacitance" in Formula (5) is the capacitance before repeating the aforementioned cycle for 100 thousand times. The "initial cell volume" in Formula (6) is the volume of the evaluation cell before repeating the aforementioned cycle for 100 thousand times. The "initial resistance" in Formula (7) is the direct current internal resistance of the evaluation cell before repeating the aforementioned cycle for 100 thousand times.

(8-2-9) Methods of Evaluation of Charge and Discharge Characteristics in Low Temperatures and Results of Evaluation

The following evaluations were conducted under the condition of minus 30□ using the prepared evaluation cell.

<Discharging Characteristics>

The evaluation cell was charged at a constant electric current of 10 A until the cell volume reached 3.8 V. Then, the constant-voltage charging, which applies a constant voltage of 3.8 V, was conducted for 30 minutes. Then, a discharge capacity of the cell was measured after being discharged at a constant electric current of 10 A until the cell voltage reached 2.2 V. Thus measured value was evaluated as the discharge capacity. In addition, a value was calculated by dividing the voltage difference between the voltage immediately before the initiation of the discharge and the voltage 0.1 second after the initiation of the discharge by the discharge current. Thus calculated value was evaluated as a resistance. The resistance is the direct current internal resistance of the evaluation cell.

<Charging Characteristics>

The evaluation cell was charged at a constant electric current of 10 A until the cell volume reached 2.2 V. Then, the constant-voltage charging, which applies a constant voltage of 2.2 V, was conducted for 30 minutes. Then, a charge capacity of the cell was measured after being charged at a constant electric current of 10 A until the cell voltage reached 3.8 V. Thus measured value was evaluated as the charge capacity. In addition, a value was calculated by dividing the voltage difference between the voltage immediately before the initiation of the discharge and the voltage 0.1 second after the initiation of the discharge by the discharge current. Thus calculated value was evaluated as the resistance. The resistance is the direct current internal resistance of the evaluation cell.

(8-3) Second Embodiment

The same procedures as the first embodiment were taken except for supplying the electrolyte solution baths 205, 7, 207 with the electrolyte solution A-1 in place of the electrolyte solution B. The results of the evaluation were shown in Table 1.

(8-4) Comparative Example 1

The same procedures as the first embodiment were taken except for supplying the electrolyte solution bath 203 with the electrolyte solution B in place of the electrolyte solution A-1. The results of the evaluation were shown in Table 1.

(8-5) Comparative Example 2

The same procedures as the first embodiment were taken except for supplying the electrolyte solution bath 203 with the electrolyte solution B in place of the electrolyte solution A-1 and supplying the electrolyte solution baths 205, 7, 207 with the electrolyte solution A-1 in place of the electrolyte solution B. The results of the evaluation were shown in Table 1.

<Other Embodiments>

Although the embodiments of the present disclosure have been explained hereinbefore, implementation of the present disclosure should not be limited to the aforementioned embodiment and can be modified in various modes.

(1) In the first embodiment, pre-doping may also be conducted using a single-wafer processing method. The single-wafer processing method is a method of pre-doping a cut electrode plate and a cut alkali metal plate while having them placed in an electrolyte solution via a separator.

(2) Functions of one element in each of the aforementioned embodiments may be shared with two or more elements. Functions of two or more elements may be integrated in one element. A part of configurations of each of the aforementioned embodiments may be omitted. At least a part of the configurations of each of the aforementioned embodiments may be added to or replaced with a different configuration of the aforementioned embodiments. Any and all modes included in the technical ideas defined by the languages recited in the claims are embodiments of the present disclosure.

(3) Aside from the aforementioned method of manufacturing an electrode, the present disclosure can also be implemented in various forms such as, as an electrode manufacturing apparatus, as a system including the electrode manufacturing apparatus as one component, and as a predoping method.

**Claims**

1. A method of manufacturing an electrode including an active material doped with an alkali metal, the method comprising:

    immersing an electrode precursor in a pretreatment solution, wherein the electrode precursor includes a current collector and an active material layer, wherein the active material layer is formed on a surface of the current collector and contains an active material, and wherein the pretreatment solution includes alkali metal ion, a solvent, and an additive that is capable of controlling reductive decomposition of the solvent; and
    doping the active material with an alkali metal by using a dope solution including alkali metal ion after immersing the electrode precursor in the pretreatment solution.

2. The method of manufacturing an electrode according to claim 1,
   wherein a concentration of the additive in the pretreatment solution is 0.001 percent by mass or more and 10 percent by mass or less.

3. The method of manufacturing an electrode according to claim 1 or 2,
   wherein the additive includes one or more kinds selected from a group consisting of vinylene carbonate, fluoroethylene carbonate, vinyl ethylene carbonate, 1, 3-propane sultone, 1, 4-butane sultone, 1, 3-propene sultone, succinonitrile, and adiponitrile.

4. The method of manufacturing an electrode according to claim 3,
   wherein the additive further includes one or more kinds selected from a group consisting of lithium difluorophosphate, lithium bis(fluorosulfonyl)imide, lithium bis(trifluoromethanesulfonyl)imide, lithium borofluoride, lithium bis(oxalato)borate, and $LiPF_2C_4O_8$.

5. The method of manufacturing an electrode according to any one of claims 1 to 4,
   wherein the solvent is one or more kinds selected from a group consisting of a carbonate-based solvent, an ester-based solvent, an ether-based solvent, a hydrocarbon-based solvent, a nitrile-based solvent, a sulfur-based solvent, and an amide-based solvent.

6. The method of manufacturing an electrode according to any one of claims 1 to 4,
   wherein the solvent is a carbonate-based solvent.

7. The method of manufacturing an electrode according to any one of claims 1 to 6,
   wherein a concentration of the additive in the dope solution is 0.1 percent by mass or less.

8. A method of manufacturing a power storage device including an electrode cell, the method comprising:

   immersing a negative electrode precursor in a pretreatment solution, wherein the negative electrode precursor includes a negative electrode current collector and a negative-electrode active material layer, wherein the negative-electrode active material layer is formed on a surface of the negative electrode current collector and contains a negative-electrode active material, and wherein the pretreatment solution includes alkali metal ion, a solvent, and an additive that is capable of controlling reductive decomposition of the solvent;
   producing a negative electrode by doping the negative-electrode active material with an alkali metal by using a dope solution including alkali metal ion after immersing the negative electrode precursor in the pretreatment solution; and
   forming the electrode cell by serially laminating the negative electrode, a separator, and an electrode different from the negative electrode.

FIG. 1

FIG. 2

EP 3 955 342 A1

FIG. 3

21

FIG. 4

FIG. 5

95

93

95

FIG. 6

## INTERNATIONAL SEARCH REPORT

International application No.

PCT/JP2020/007736

### A. CLASSIFICATION OF SUBJECT MATTER
Int. Cl. H01M4/139(2010.01)i, H01G11/06(2013.01)i, H01G11/50(2013.01)i, H01G11/86(2013.01)i
FI: H01M4/139, H01G11/86, H01G11/50, H01G11/06
According to International Patent Classification (IPC) or to both national classification and IPC

### B. FIELDS SEARCHED
Minimum documentation searched (classification system followed by classification symbols)
Int. Cl. H01M4/139, H01G11/06, H01G11/50, H01G11/86

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2017/146223 A1 (JSR CORP.) 31 August 2017, claims, paragraphs [0025]-[0186], fig. 16, 18 | 1-8 |
| A | CN 106702441 A (TIANQI LITHIUM CORPORATION) 24 May 2017, claims, paragraphs [0021]-[0052], fig. 1 | 1-8 |
| A | JP 2000-200610 A (HITACHI, LTD.) 18 July 2000, claims, paragraphs [0048]-[0096], fig. 1 | 1-8 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15.05.2020 | 26.05.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

Information on patent family members

| International application No. |
|---|
| PCT/JP2020/007736 |

| Patent Documents referred to in the Report | Publication Date | Patent Family | Publication Date |
|---|---|---|---|
| WO 2017/146223 A1 | 31.08.2017 | US 2019/0074143 A1 claims, paragraphs [0062]-[0265], fig. 16, 18 EP 3422377 A1 CN 108701553 A KR 10-2018-0114063 A | |
| CN 106702441 A | 24.05.2017 | (Family: none) | |
| JP 2000-200610 A | 18.07.2000 | (Family: none) | |

Form PCT/ISA/210 (patent family annex) (January 2015)

**EP 3 955 342 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019074791 A
- JP H9293499 A
- JP 2012069894 A
- JP H10308212 A
- JP 2008077963 A
- JP 2012049543 A
- JP 2012049544 A
- JP 2009246137 A
- JP 2013258392 A
- JP 2005123175 A
- JP 2006107795 A